# EUROPEAN PATENT SPECIFICATION

(11) **EP 0 436 036 B1**
(45) Date of publication and mention of the grant of the patent: **09.01.2002**
(21) Application number: 90910923.3
(22) Date of filing: 18.07.1990
(51) Int. Cl.: H04J 3/06, H04L 7/00

(54) **FRAME ALIGNER, CONTROL METHOD THEREOF AND APPARATUS THEREFOR**
RAHMENAUSGLEICHER, SEIN STEUERUNGSVERFAHREN SOWIE EINE VORRICHTUNG DAZU
DISPOSITIF D'ALIGNEMENT DE BLOCS, SON PROCEDE DE COMMANDE ET APPAREIL PREVU A CET EFFET

(30) Priority: 19.07.1989 JP 18468389
(43) Date of publication of application: 10.07.1991
(73) Proprietor: Hitachi, Ltd., Chiyoda-ku, Tokyo 101 (JP); Nippon Telegraph and Telephone Corporation, Tokyo 100 (JP)
(72) Inventor: ASHI, Yoshihiro Hitachifukigamiryo, Kanagawa 245 (JP); KANNO, Tadayuki Hitachimaioka Daiichishataku, Kanagawa 244 (JP); TAKATORI, Masahiro Hitachi Dainikyoshinryo, Tokyo 185 (JP); UEDA, Hiromi Nippon Telegraph and Telephone, Tokyo 100 (JP)
(74) Representative: Altenburg, Udo, Dipl.-Phys.
(86) International application number: JP9000925
(87) International publication number: WO9101601

(56) References cited:
- EP-A- 0 231 590
- EP-A- 0 323 248
- GB-A- 2 066 627
- JP-A- 63 131 735
- JP-U- 1 100 544
- PATENT ABSTRACTS OF JAPAN vol. 01, no. 209 (E-421)22 July 1986

## Description

### TECHNICAL FIELD

The present invention relates to a system for transmitting a plurality of low-speed signals having a frame structure within a high-speed frame in multiplex fashion like SONET, or in particular to a frame aligner and a method and system for control suitable for matching the frame phases between the plurality of low-speed signals.

### BACKGROUND ART

Conventional systems, as described in Research Applications Report Vol. 28, No. 7, p. 210, Chapter 3.1.1, are known to be of three types including (1) fixed delayed insertion-removal plus frame memory, (2) twoframe memory, and (3) elastic store plus frame memory.

All of these three types of system are such that the phase of writing data into a frame aligner memory (hereinafter referred to as "the frame memory") is compared with the phase of reading the same data, and the approach of one phase to the other is detected thereby to control the writing into the frame memory.

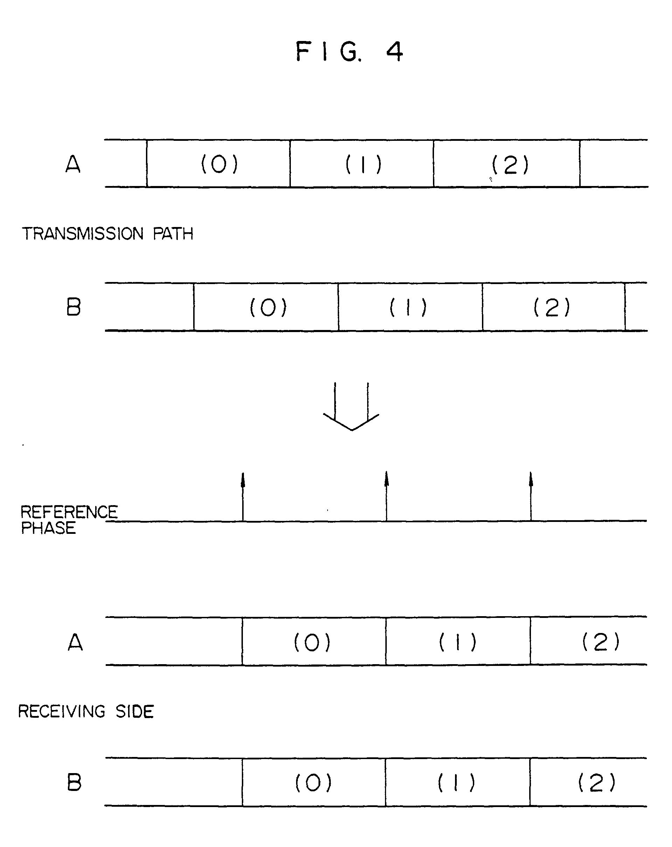

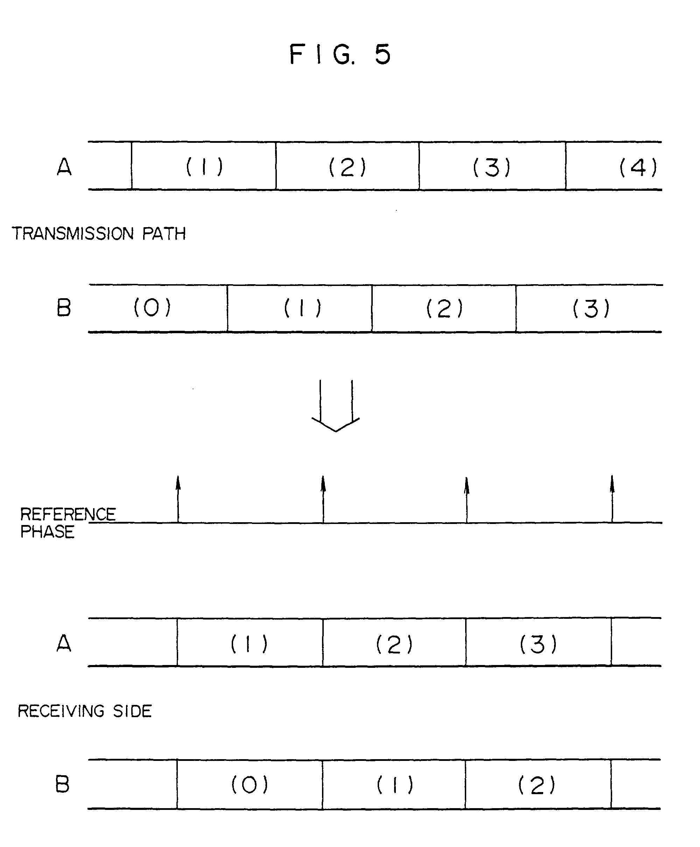

In a system for transmitting low-speed signals having a frame structure within a high-speed frame in multiplex fashion, it is necessary to assure the time sequence (hereinafter referred to as "TSSI", an abbreviation of Time Slot Sequence Integrity) by matching the phases between the low-speed signals arriving from the same channel at the time of terminating the highspeed frame. Fig. 4 shows a case in which the TSSI is assured, and Fig. 5 shows a case in which it is not assured. In Figs. 4 and 5, there are two types of low-speed frames, A and B. The numerical value in each frame indicates the order of generation of the particular frame. The received frames are aligned in accordance with a predetermined reference phase at the receiving end. Now, assume that the TSSIs of A and B are required to coincide with each other at the receiving end, i.e., that the TSSIs of A and B are required to be assured. In such a case, the reference phase must exist at a place where the order of generation of A coincides with that of B as shown in Fig. 4.

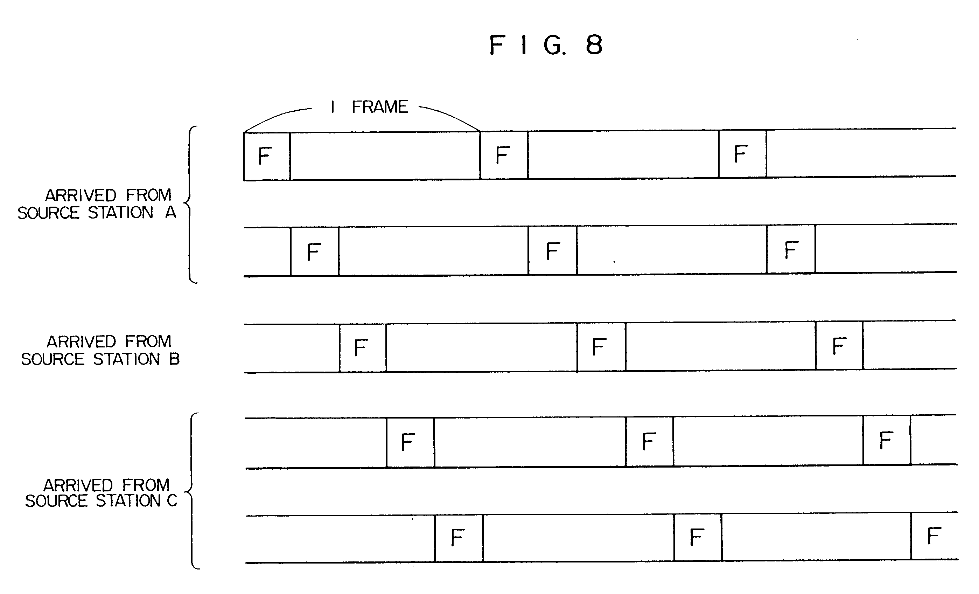

All the conventional systems described above handle only a single frame, so that in terminating the above-mentioned high-speed frames, it is required that each low-speed signal be separated and be subjected to frame alignment individually. As a result, as shown in Fig. 8, in the case where a plurality of low-speed signals to be terminated arrive from a plurality of source stations with the phases thereof distributed over a whole frame, an attempt to assure the TSSI for each of all the source stations would fail as it is impossible to set a reference phase capable of assuring the TSSI for all the source stations.

European patent application EP-A-0 231 590 describes a method for the frame alignment of tributaries in which the write address is determined by subtracting a stored tributary offset from the current count of a channel counter.

Accordingly, an object of the present invention is to provide a frame aligner and a method and system for controlling the same which are capable of executing the frame alignment while assuring the TSSI at the same time.

### DISCLOSURE OF INVENTION

According to one aspect of the invention, there is provided a frame aligner control method according to claim 1.

According to another aspect of the present invention, there is provided a frame aligner control apparatus according to claim 14.

In a further aspect of the invention, there is provided a frame aligner according to claim 22.

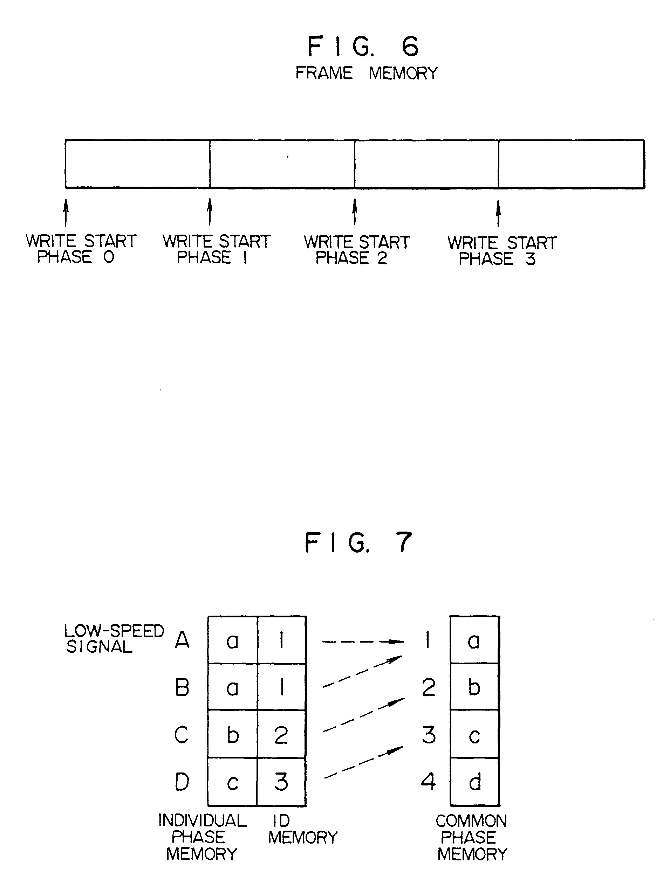

According to the present invention, as shown in Fig. 6, a plurality of candidates for write start phase are set in a frame memory beforehand, and there are provided an individual phase memory for storing a write start phase selected for each low-speed signal accommodated in the high-speed frame, a common phase memory for storing a write start phase shared by a plurality of low speed signals among which the TSSI is to be assured, and an identification memory indicating a particular common phase memory which should be referenced. As an example, explanation will be made, with reference to Fig. 7, about a method of setting each of the above-mentioned memories in the case where there exist four types of low-speed signals A, B, C and D, of which the TSSI between the low-speed signals A and B is to be assured. First, the contents of the identification memories of A, B, C and D are set, for example, to 1, 1, 2 and 3, respectively. In setting the individual phase memory of A, for example, first the value of its own identification memory is checked and the value of the common phase memory 1 is referenced and the value (a) of the common phase memory 1 is written into the own individual phase memory. Similarly, in the case of setting the individual phase memory of B, the value of its own identification memory is checked and, the value of the common phase memory 1 is referenced and the value (a) of the common phase memory is written into the own individual phase memory. In the case of setting the individual phase memory of C, the value of the identification memory of C is checked and the value of the common phase memory 2 is referenced and the value (b) of the common phase memory 2 is written into the own individual phase memory. In the case where the individual phase memory of D is set, the value of the identification memory of D is checked and the value of the common phase memory 3 is referenced and the value (c) of the common phase memory 3 is written into the own individual phase memory. As a result, the contents of the individual phase memories of A and B come to coincide with each other, thereby making it possible to set a reference phase, assuring TSSI between A and B without being affected by C or D.

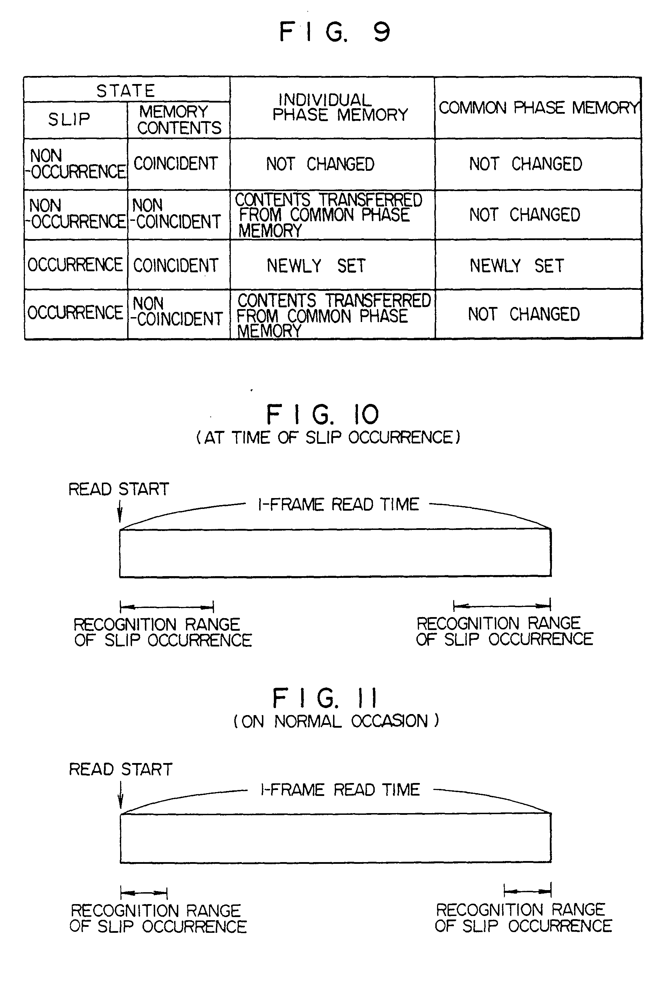

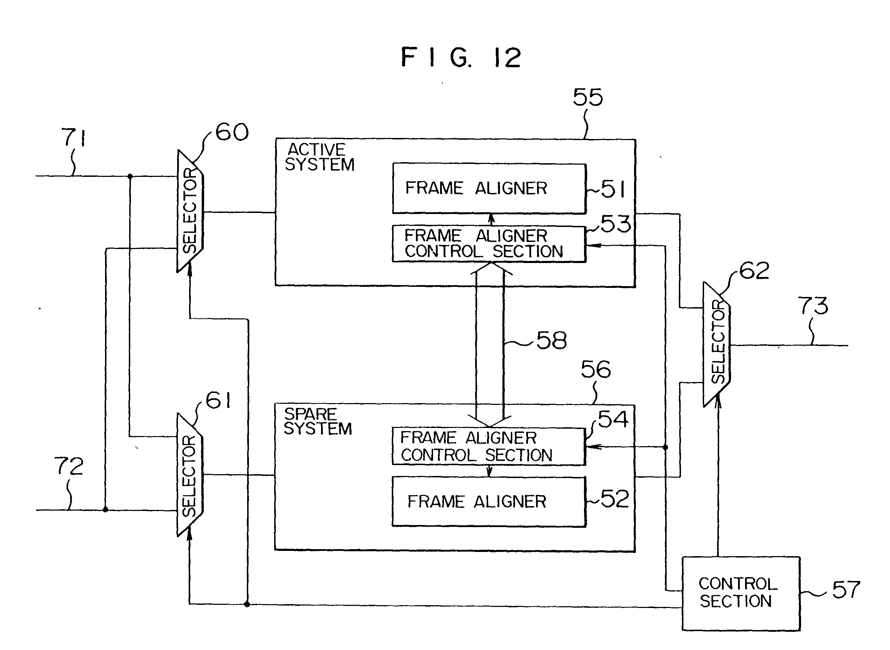

The following two information are used for updating the contents of the individual phase memory and the common phase memory: One is slip occurrence information, and the other is the result of comparing the contents of the individual phase memory and the common phase memory. The updating operation described in the following is performed on the basis of these two information (See Fig. 9): In the case where the contents of the individual phase memory and the common phase memory are basically different from each other, the contents of the common phase memory are transferred to the individual phase memory. Note however that in the case where a slip occurs and at the same time the contents of the individual phase memory coincide with those of the common phase memory, a new write start phase is selected and stored in the common phase memory and the individual phase memory. The following method is available for selecting a new write start phase: First, it is decided whether the slip that has occurred is due to the approach of the write phase to the read phase (such a slip will hereinafter be referred to as "the forward slip") or due to the approach of the read phase to the write phase (such a slip will hereinafter be referred to as "the rearward slip") thereby to select a new write phase. Specifically, in the case where the current write start phase is 1 in Fig. 6, the write start phase 0 is selected as a new write start phase if the slip that occurred is a forward one. If the slip that occurred is a rearward one, on the other hand, the write start phase 2 is selected as a new write start phase. This selecting operation is easily realizable by adding 1 to or subtracting 1 from the contents of the memories.

The above-mentioned operation permits the frame alignment to be executed while at the same time assuring TSSI between low-speed signals having a frame structure accommodated in a high-speed frame.

Frame alignment may be executed also by the operation described below while assuring TSSI between low-speed signals having a frame structure accommodated in a high-speed frame.

First, as shown in Fig. 6, a plurality of candidates for write start phase are set in a frame memory in advance. There are also provided an individual phase memory for storing the write start phase selected for each low-speed signal accommodated in the high-speed frame and a memory (hereinafter referred to as "the reference memory") indicating a particular individual phase memory to be referenced for each low-speed signal. As an example, explanation will be made with reference to Fig. 13 about a method of setting each memory in the case where there exist four types of low-speed signal, A, B, C and D, of which the TSSI among the low-speed signals A, B and C is to be assured. First, the contents of the reference memories for A, B, C and D are set as 10, 00, 01 and so on. In setting the individual phase memory for A, for example, first the value of its own reference memory is checked and the value of the individual phase memory for C is referenced, so that if the value of this individual phase memory is different from the value of the own individual phase memory, the value of the individual phase memory for C is transferred to the own individual phase memory. In the case of setting the individual phase memory for B, on the other hand, the value of its own reference memory is checked first of all, followed by referencing the value of the individual phase memory for A, so that if the value of the individual phase memory for A is different from the value of the own individual phase memory, the value of the individual phase memory for A is transferred to the own individual phase memory. In setting the individual phase memory for C, first the value of its own access memory is checked, followed by referencing the individual phase memory for B, so that if the value of the individual phase memory for B is different from the value of the own individual phase memory, the value of the individual phase memory for B is transferred to the original individual phase memory. In this way, if mutually-different mating signals are designated among low-speed signals (A, B and C in the case under consideration) requiring TSSI assurance, the contents of the individual phase memories for A, B and C coincide with each other, thereby making it possible to set a reference phase for assuring the TSSI of A, B and C without being affected by D.

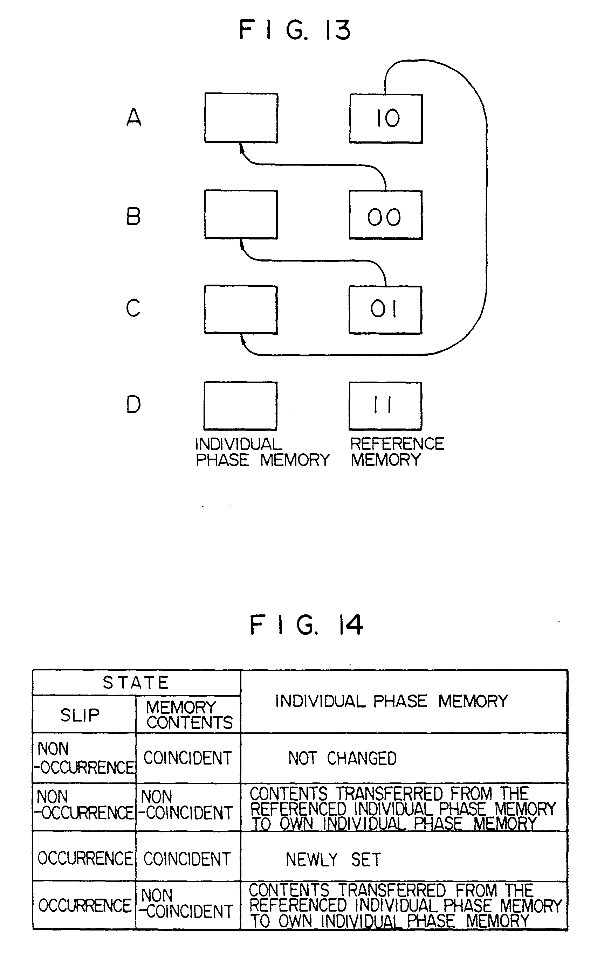

The following two information are used for updating the contents of the individual phase memory and the common phase memory: One is slip occurrence information and the other is the result of comparing the contents of the original individual phase memory with those of the mating individual phase memory designated in the reference memory. The updating operation described in the following is performed on the basis of these two information (See Fig. 14): In the case where the contents of own individual phase memory are basically different from those of the mating individual phase memory designated in the reference memory, the contents of the mating individual phase memory designated in the reference memory are transferred to the own individual phase memory. Note however that in the case where a slip occurs and the contents of the own individual phase memory coincide with those of the mating individual phase memory designated in the reference memory, a new write start phase is selected and stored in the original individual phase memory.

The above-mentioned operation permits the frame alignment to be executed while assuring TSSI among low-speed signals having a frame structure accommodated in a high-speed frame.

### BRIEF DESCRIPTION OF DRAWINGS

Fig. 1 is a diagram showing a first embodiment of the present invention.

Fig. 2 is a diagram showing the construction of a frame memory used for explaining an embodiment.

Fig. 3 is a diagram showing a configuration of a frame used for explaining an embodiment.

Fig. 4 is a diagram showing a case in which TSSI is capable of being assured.

Fig. 5 is a diagram showing a case in which TSSI is incapable of being assured.

Fig. 6 is a diagram showing the construction of a frame memory.

Fig. 7 is a diagram showing the functions of each memory.

Fig. 8 is a diagram showing a case in which low-speed signals have arrived from a plurality of source stations.

Fig. 9 is a diagram showing the updating operation of each memory.

Fig. 10 is a diagram showing conditions for slip occurrence decision at the time of slip occurrence.

Fig. 11 is a diagram showing conditions for slip occurrence decision on normal occasions.

Fig. 12 is a diagram showing third and fourth embodiments.

Fig. 13 is a diagram showing the state of each memory used for a second embodiment.

Fig. 14 is a diagram showing the updating operation of each memory used for the second embodiment.

Fig. 15 is a diagram showing the second embodiment.

### BEST MODE FOR CARRYING OUT THE INVENTION

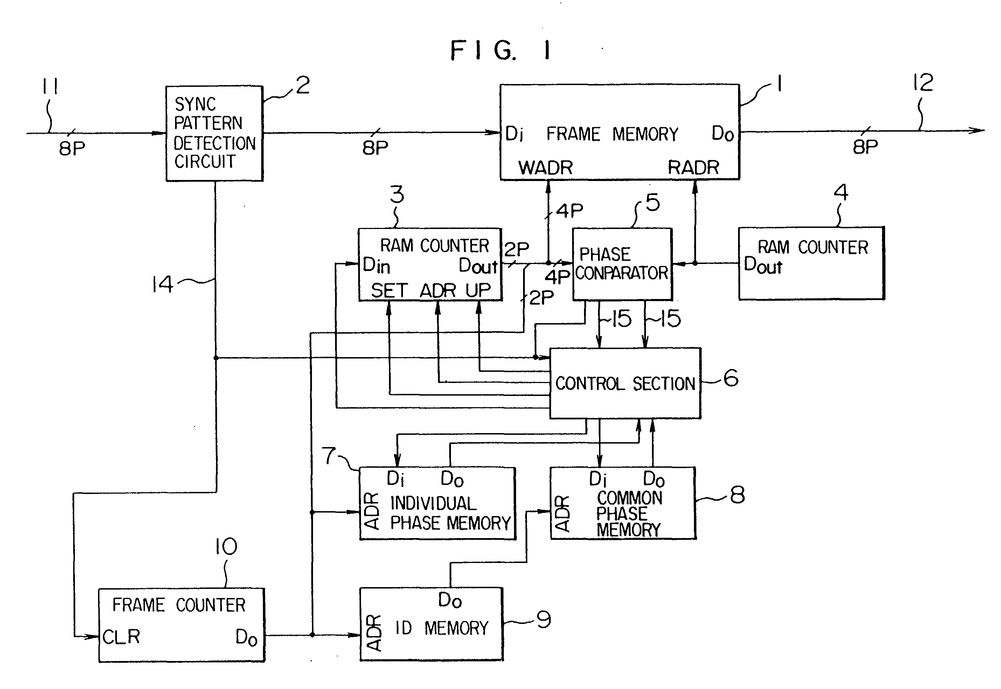

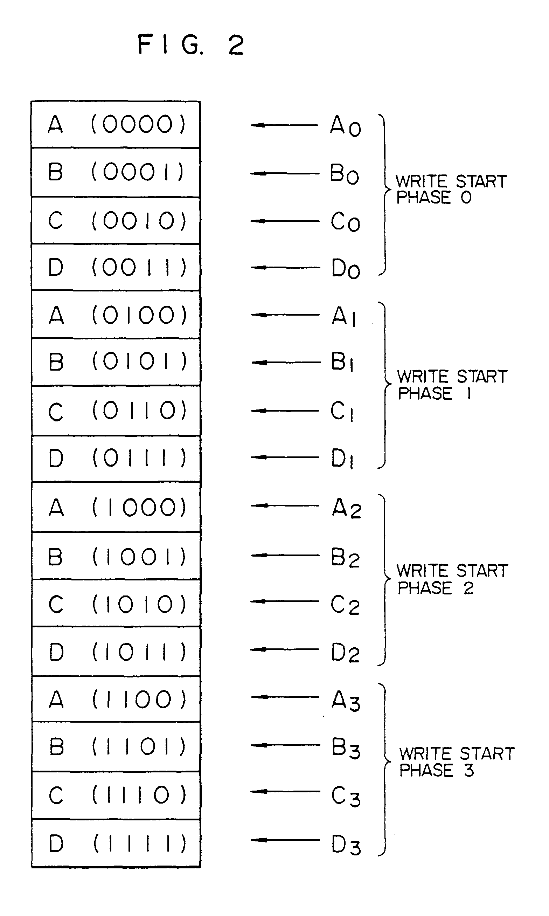

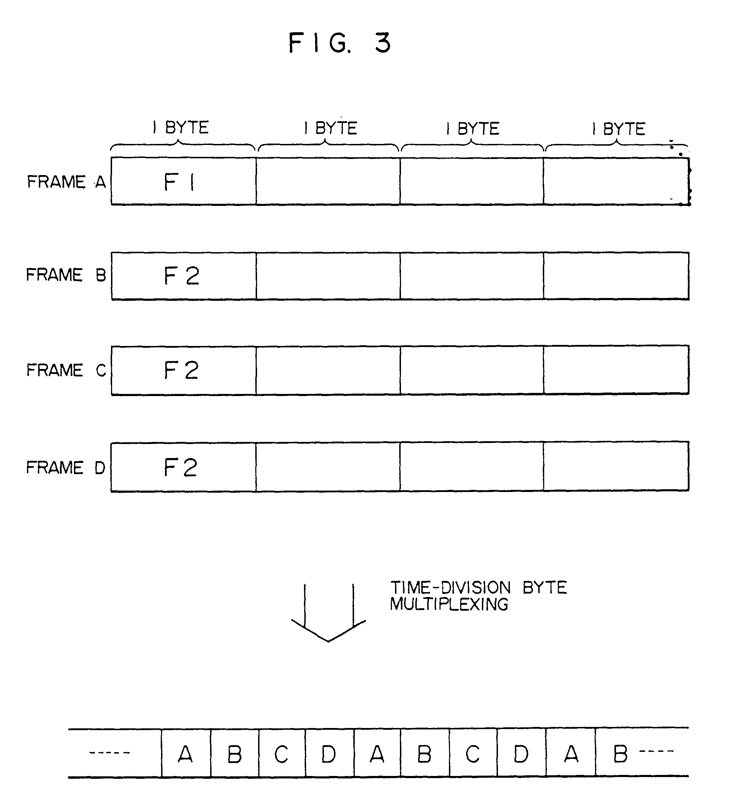

A first embodiment of the present invention will be explained with reference to Fig. 1. A frame aligner control circuit according to this embodiment is made up of an sync pattern detection circuit 2 for detecting a sync pattern of the data on an incoming highway 11, a frame memory 1 for storing the data on the incoming highway 11, a RAM counter 3 for storing a write address to the frame memory 1 of each low-speed frame, a phase comparator 5 for comparing the read phase with the write phase to detect a slip, a control section 6, an individual phase memory 7 for storing a write start phase selected for each low-speed signal accommodated in a high-speed frame, a common phase memory 8 for storing a write start phase shared by a plurality of low-speed signals for which TSSI is assured, an identification memory 9 indicating a particular common phase memory to be accessed, and a frame counter 10. The RAM counter is one for having a RAM store the condition transition information of a counter corresponding to individual signals and effecting the updating operation thereof by a multiplexing process. There exist four types of low-speed frame, A, B, C and D, as shown in fig. 3. The low-speed frames A, B, C and D are multiplexed in bytes in that order for transmission. Each frame has a length of four bytes. Signals are assumed to be transmitted by being developed in eight parallels on the incoming highway 11. A sync pattern F1 (1 byte) is arranged at the head of frame A, and a sync pattern F2 (1 byte) at the heads of the frames B, C and D, respectively, so that in the case where the sync pattern detection circuit detects F1, the frame counter is cleared. The frame memory is configured as shown in Fig. 2 and has a capacity equivalent to one low-speed frame. There are four types of write start phase, 0, 1, 2 and 3. The address of each block is as shown in the parentheses of Fig. 2 from 0000 to 1111. The two least significant bits of the address correspond to the type of each low-speed frame. Specifically, A is associated with 00, B with 01, C with 10 and D with 11.

In accordance with the value of the frame counter 10, the addresses for A, B, C and D are applied to the individual phase memory 7 and the identification memory 9 (the addresses of the individual phase memory 7 and the identification memory 9 corresponding to A, B, C and D are assumed to be 00, 01, 10 and 11, respectively). The identification memory has the address of the common phase memory 8 to be referenced for each low-speed frame, and the value of the address designated in the identification memory 9 is applied to the address of the common phase memory 8. Thus the control section 6 is capable of knowing the value of the individual phase memory 7 and that of the common phase memory 8 for each low-speed frame. Further, the contents of the individual phase memory 7 and the common phase memory 8 are updated in accordance with the operation of Fig. 9 on the basis of the slip occurrence information detected by the phase comparator 5. More specifically, in the case where the value of the common phase memory 8 is different from that of the individual phase memory 7, the value of the common phase memory 8 is transferred to the individual phase memory 7. Also, even in the case where the value of the common phase memory 8 coincides with that of the individual phase memory 7, a new write start phase is selected and stored in the common phase memory 8 and the individual phase memory 7, if a slip occurs. At the time of slip occurrence, the phase comparator 5 decides whether the particular slip has occurred due to the approach of the write phase to the read phase (such a slip will hereinafter be referred to as "the forward slip") or due to the approach of the read phase to the write phase (such a slip will hereinafter be referred to as "the rearward slip") thereby to select a new write phase. Specifically, in the case where the current write start phase is 1 in Fig. 2, the write start phase 0 is selected as a new write start phase if the slip that has occurred is a forward one. If the slip that has occurred is a rearward one, on the other hand, the write start phase 2 is selected as a new write start phase. This operation of selection is executed by adding 1 to or subtracting 1 from the contents of a memory. In this case, the addition or subtraction is an operation using the total number of write start phases (4 in the present embodiment) as a modulo.

Also, the phase comparator 5 has two conditions for slip occurrence decision. They are shown in Figs. 10 and 11. A recognition range of slip occurrence is set by the value of the read RAM counter 4 of the frame memory 1. In the case where the value of the RAM counter 4 is 0, it indicates a read start timing, so that if the writing is started at a time near to this value (the points indicated by arrow in Figs. 10 and 11), it is decided that a slip has occurred. Fig. 10 shows a recognition range of slip occurrence for setting a new write start phase at the time of slip occurrence. By setting this range wider than the recognition range of slip occurrence under normal conditions shown in Fig. 11, a new write start phase is selected under stricter conditions thereby to produce a more stable condition.

The RAM counter 3 has stored therein only the two most significant bits of an address, and the two least significant bits of the value of the frame counter 10 are used as an address, as the two least significant bits of the address coincide with the type of frame. In the case where the sync pattern detection circuit 2 detects a sync pattern, the control section 6 sets an initial value in the RAM counter 3 by reference to the values of the individual phase memory 7 and the common phase memory 8. In this case, the initial value is only of two types including 00 and 10. Upon completion of writing data into the frame memory 1, unity (one) is added to the value of the RAM counter 3 (modulus 4).

The aforementioned operation executes the frame alignment by the multiplexing process while assuring TSSI.

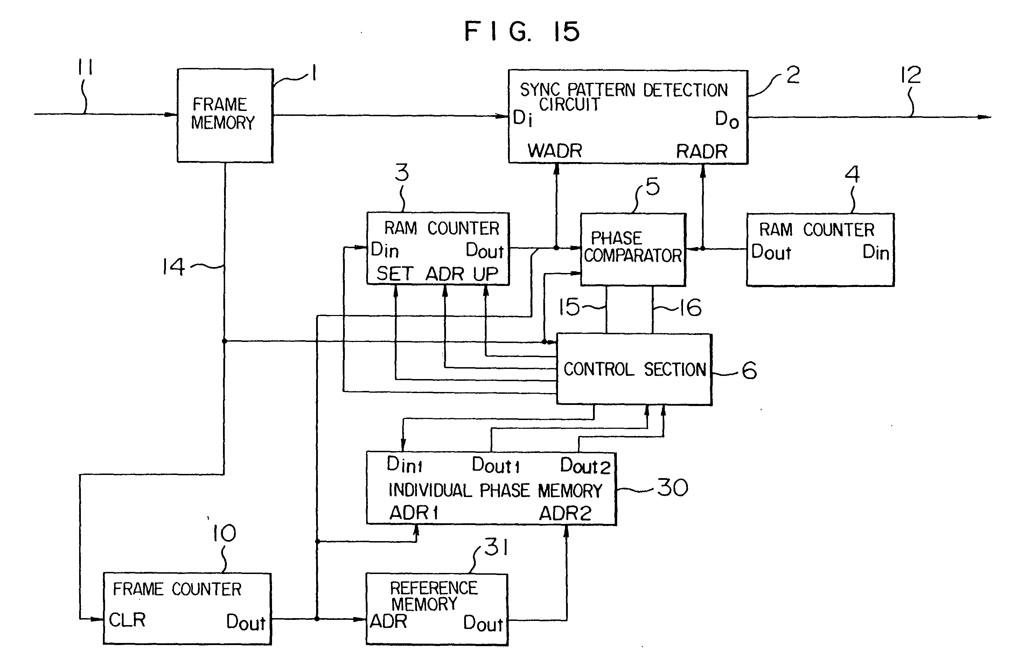

A second embodiment of the present invention will be explained with reference to Fig. 15. The frame aligner control circuit according to this embodiment is made up of a sync pattern detection circuit 2 for detecting a sync pattern of the data on the incoming highway 11, a frame memory 1 for storing the data on the incoming highway 11, a RAM counter 3 for storing an address for writing into the frame memory 1 of each low-speed frame, a RAM counter 4 for storing a read address, a phase comparator 5 for comparing the write and read phases to detect a slip, a control section 6, an individual phase memory 30 for storing the write start phase selected for each low-speed signal stored in a high-speed frame, an access memory 41 indicating a particular individual phase memory 30 to be accessed, and a frame counter 10. There exist four types of low-speed frame, A, B, C and D, as shown in Fig. 3, which are multiplexed in bytes and transmitted in that order. Each frame has a length of 4 bytes. Signals are assumed to be transmitted by being developed in eight parallels on the incoming highway 11. A sync pattern F1 (1 byte) is arranged at the head of the frame A, and a sync pattern F2 (1 byte) at the heads of the frames B, C and D, respectively, so that in the case where the sync pattern detection circuit detects F1, the frame counter is cleared. The frame memory is constructed as shown in Fig. 2 and has a capacity equivalent to one low-speed frame. The write start phase is of four types including 0, 1, 2 and 3. The address of each block is as shown in the parentheses in Fig. 2 and ranges from 0000 to 1111. The two least significant bits of an address correspond to the type of each low-speed frame. Specifically, A is represented by 00, B by 01, C by 10 and D by 11.

Now, assume a case in which of the low-speed frames A, B, C and D, TSSI is to be assured among A, B and C. In such a case, the access memories of A, B and C are set to designate mutually different mating memories. Specifically, as shown in Fig. 13, A is set to reference the individual phase memory 30 of C, B to reference that of A, and C to reference that of B. Assume that the frame of A is processed. In accordance with the value of the frame counter 10, the address for the frame A is applied to the individual phase memory 30 and the reference memory 31. And the output of the reference memory 31 is applied to the individual phase memory 30. As a result, the control section 6 can know the write start phase held by A at present and the write start phase of the mating memory (C in this case) to be referenced by A. The individual phase memory in this case is made up of a dual-port RAM. Further, the contents of the individual phase memory 30 are updated in accordance with the operation of Fig. 14 on the basis of the slip information detected by the phase comparator 5. Specifically, in the case where the value of own individual phase memory 30 is different from that of the mating individual phase memory 30, the value of the mating individual phase memory 30 is transferred to the own individual phase memory 30. Also, if a slip occurs, a new write start phase is selected and stored only in the own individual phase memory 30, even when the value of the own individual phase memory 30 coincides with that of the mating individual phase memory 30. In this way, a common reference phase is capable of being set between low-speed signals for which TSSI is assured, by designating the mating signal in chain among low-speed signals for which TSSI is to be assured.

In the manner as mentioned above, the frame alignment is executed by the multiplexing process while assuring TSSI by the operation described above.

A third embodiment of the present invention will be explained with reference to Fig. 12. In this embodiment, there exist one active system 55 and one spare system 56. The active system 55 has a frame aligner 51 and a frame aligner control section 53 therein, and the spare system 56 has a frame aligner 52 and a frame aligner control section 54 therein. A 0-system multiplexed signal 71 or a 1-system multiplexed signal 72 is selected as an input by a selector 60 or 61. The active system 55 or the spare system 56 is selected as an output by a selector 62. A control section 57 is for switching the selector 62 to the spare system side in case of a fault of the active system 55. At the same time, the control section 57 transfers the contents of the individual phase memory, the common phase memory and the identification memory in the frame aligner control section 53 in the active system 55 to the individual phase memory, the common phase memory and the identification memory respectively in the frame aligner control section 54 in the spare system 56.

The aforementioned operation realizes an uninterrupted instantaneous switching.

A fourth embodiment of the present invention will be explained with reference to Fig. 12. According to this embodiment, there exist one active system 55 and one spare system 56. The active system 55 has a frame aligner 51 and a frame aligner control section 53 existing therein, and the spare system 56 has a frame aligner 52 and a frame aligner control section 54 therein. A 0-system multiplexed signal 71 or a 1-system multiplexed signal 72 is selected as an input by a selector 60 or 61. The active system 55 or the spare system 56 is selected as an output by a selector 62. The control section 57 controls the contents of the individual phase memory, the common phase memory and the identification memory in the frame aligner control section 53 in the active system 55 into coincidence with the contents of the individual phase memory, the common phase memory and the identification memory respectively in the frame aligner control section 54 in the spare system 56.

The control section 57 switches the selector 62 to the spare system side in case of a fault of the active system 55.

The operation mentioned above realizes an uninterrupted instantaneous switching.

As will be understood from the foregoing description, according to the present invention, frames multiplexed by time division are capable of being effectively subjected to frame alignment by a multiplexing process.

## Claims

1. A frame aligner control method for use in a system for transmitting a plurality of low-speed signals having a frame structure in a high-speed frame by multiplexing the signals, **characterized in that** in the method a plurality of candidates for a write start phase are set in a frame aligner memory (1), wherein the term write start phase corresponds to a designator for a memory area of the frame aligner memory, a write start phase is selected from the candidates for write start phases for the frame aligner memory by referencing a common phase memory (8) which has stored therein write start phases shared by a plurality of low-speed signals requiring phase matching in the high-speed frame, and a write start phase is selected from among the candidates for write start phases for the frame aligner memory.

2. The method of frame aligner control according to claim 1, **characterized in that** the common memory storing therein write start phases shared by low-speed signals requiring phase matching is referenced through a memory (9) indicating a particular one of the write start phases stored in the memory to be referenced.

3. The method of frame aligner control according to claim 2, **characterized in that** when it is decided that a slip has occurred due to the write phase attempting to overtake the read phase or the read phase attempting to overtake the write phase, a selection rule of a new write start phase is switched.

4. A method of frame aligner control according to claim 3, **characterized in that** the object of selection under the selection rule of the write start phase is a write start phase adjacent to the presently-held write start phase along the direction of advance or retardation in time series.

5. The method of frame aligner control according to claim 1, **characterized in that** when it is decided that a slip has occurred due to the write phase attempting to overtake the read phase or the read phase attempting to overtake the write phase, a selection rule of a new write start phase is switched.

6. A method of frame aligner control according to claim 5, **characterized in that** the object of selection under the selection rule of the write start phase is a write start phase adjacent to the presently-held write start phase along the direction of advance or retardation in time series.

7. A method of frame aligner control according to claim 1, **characterized in that** the frame alignment is effected by a time-division multiplexing process.

8. A method of frame aligner control according to claim 1, **characterized in that** conditions for slip decision at the time of initialization are different from conditions for slip decision on normal occasion.

9. A method of frame aligner control according to claim 1, **characterized in that** conditions for slip occurrence decision are provided in the frame aligner memory, one for each different type of low-speed signal, in the case where there are a plurality of types of low-speed signal.

10. A method of frame aligner control according to claim 1, **characterized in that** in the case where the frame aligner is of a redundant configuration such that one active system (55) and at least one spare system (56) are operated in parallel to each other, contents of the common phase memory of the active system are transferred to the common phase memory of the spare system beforehand in switching from the active system to the spare system.

11. A method of frame aligner control according to claim 1, **characterized in that** in the case where the frame aligner is of a redundant configuration such that one active system (55) and at least one spare system (56) are operated in parallel to each other, contents of the common phase memory of the active system are always rendered to coincide with the contents of the common phase memory of the spare system.

12. The method of frame aligner control according to claim 1, **characterized in that** the number of times the slip occurs successively is counted, and an alarm is issued when the number of slips occurring successively exceeds a predetermined value.

13. A method of frame aligner control according to claim 1, **characterized in that** the number of slips occurring successively is counted, and the write start phase for the frame aligner memory is fixed when the number of slips occurring successively exceeds a predetermined value.

14. A frame aligner control apparatus for use in a system for transmitting a plurality of low-speed signals having a frame structure in a high-speed frame by multiplexing the low-speed signals, comprising a frame aligner memory, **characterized in that** a plurality of candidates of write start phases are set in said frame aligner memory (1), the term write start phase corresponding to a designator for a memory area of the frame aligner memory, and that said control apparatus comprises individual phase memories (30), one for each low-speed signal accommodated in the high-speed frame, for storing a write start phase selected from the candidates of write start phases for the frame aligner memory, reference memories (31), one for each low-speed signal, for indicating a particular individual phase memory to be referenced, means (10) for setting the reference memories in such a manner as to reference the individual phase memories of mutually-different mating ones of the low-speed signals requiring phase matching, and means for transferring values of the referenced individual phase memories of mating low-speed signals to the individual phase memories of the referencing side.

15. The frame aligner control apparatus according to claim 14, **characterized in that** the frame alignment is effected by a multiplexing process.

16. The frame aligner control apparatus according to claim 14, **characterized in that** conditions for slip decision at the time of initialization are different from those for slip decision on normal occasions.

17. The frame aligner control apparatus according to claim 14, **characterized in that** in the case, where there are provided a plurality of types of low-speed signal, a condition for slip occurrence decision is provided in the frame aligner memory for each of the different types of the signal.

18. The frame aligner control apparatus according to claim 14, **characterized in that in that** in the case where the frame aligner is of a redundant configuration such that one active system (55) and at least one spare system (56) are operated in parallel to each other, contents of the individual phase memories of the active system are transferred to the individual phase memories of the spare system beforehand in switching from the active system to the spare system.

19. The frame aligner control apparatus according to claim 14, **characterized by** comprising means for rendering contents of the individual phase memories of the active system to always coincide with contents of the individual phase memories of the spare system in the case where the frame aligner is of a redundant configuration such that one active system (55) and at least one spare system (56) are operated in parallel to each other.

20. The frame aligner control apparatus according to claim 14, **characterized by** comprising means for counting the number of slips occurring successively and means for issuing an alarm when the number of slips occurring successively exceeds a predetermined value.

21. The frame aligner control apparatus according to claim 14, **characterized by** comprising means for counting the number of slips occurring successively and means for fixing the write start phase of the frame aligner memory when the number of slips occurring successively exceeds a predetermined value.

22. A frame aligner for use in a system for transmitting a plurality of low-speed signals having a frame structure in a high-speed frame by multiplexing the low-speed signals, comprising a frame aligner memory (1) for storing the low-speed signals, **characterized in that** the frame aligner further comprises a write counter (3) for designating a write address of the frame aligner memory for each low-speed signal, a read counter (4) for designating a read address of the frame aligner memory for each low-speed signal, a phase comparator (5) for comparing the value of the read counter with that of the write counter thereby to detect the occurrence of a slip, a first memory (7) for storing a selected write start phase for each low-speed signal accommodated in the high-speed frame, a second memory (8) for storing a write start phase corresponding to a designator for a memory area of the frame aligner memory, shared by a plurality of the low-speed signals requiring phase matching, a third memory (9) for indicating a particular second memory to be referenced, and a circuit for selecting a write start phase for the frame aligner memory in accordance with the result of comparison between the contents of the first memory and the second memory and the slip occurrence information detected by the phase comparator.

23. The frame aligner control apparatus according to claim 14, **characterized in that** it comprises a write counter (3) for designating a write address of the frame aligner memory for each low-speed signal, a read counter (4) for designating a read address of the frame aligner memory for each low-speed signal, a phase comparator (5) for detecting the occurrence of a slip by comparing the value of the read counter with that of the write counter, and a circuit for selecting a write start phase of the frame aligner memory in accordance with the slip occurrence information detected by the phase comparator and the result of comparing the contents of an individual phase memory at an address allotted to a particular low-speed signal with the contents of the individual phase memory at an address designated by the contents of a reference memory at an address allotted to the particular low speed signal.

## Patentansprüche

1. Verfahren einer Rahmenausrichter-Steuerung zur Verwendung in einem System zum Übertragen einer Mehrzahl von Signalen niedriger Geschwindigkeit mit einer Rahmenstruktur in einen Rahmen hoher Geschwindigkeit durch Multiplexen der Signale,
**dadurch gekennzeichnet, dass**
in dem Verfahren eine Mehrzahl von Kandidaten für eine Schreibe-Startphase in einem Rahmenausrichter-Speicher (1) gesetzt werden, wobei der Ausdruck Schreibe-Startphase einem Bezeichner für einen Speicherbereich des Rahmenausrichter-Speichers entspricht, eine Schreibe-Startphase aus den Kandidaten für Schreibe-Startphasen ausgewählt wird für den Rahmenausrichter-Speicher durch Referenzieren eines gemeinsamen Phasenspeichers (8), der darin Schreibe-Startphasen gespeichert hat, die von einer Mehrzahl von Signalen niedriger Geschwindigkeit geteilt werden, die eine Phasenanpassung in dem Rahmen hoher Geschwindigkeit erfordern, und eine Schreibe-Startphase unter den Kandidaten für Schreibe-Startphasen für den Rahmenausrichter-Speicher ausgewählt wird.

2. Verfahren einer Rahmenausrichter-Steuerung nach Anspruch 1, **dadurch gekennzeichnet, dass** der gemeinsame Speicher, der darin Schreibe-Startphasen speichert, die von Signalen niedriger Geschwindigkeit geteilt werden, die eine Phasenanpassung erfordern, referenziert wird durch einen Speicher (9), der eine spezielle der in dem Speicher gespeicherten Schreibe-Startphasen, die referenziert werden soll, kennzeichnet.

3. Verfahren einer Rahmenausrichter-Steuerung nach Anspruch 2, **dadurch gekennzeichnet, dass**, wenn entschieden ist, dass ein Schlupf aufgetreten ist aufgrund der Schreibphase, die versucht, die Lesephase zu überholen, oder der Lesephase, die versucht, die Schreibphase zu überholen, eine Auswahlregel einer neuen Schreib-Startphase geschaltet wird.

4. Verfahren einer Rahmenausrichter-Steuerung nach Anspruch 3, **dadurch gekennzeichnet, dass** der Gegenstand einer Auswahl unter der Auswahlregel der Schreib-Startphase eine Schreib-Startphase ist in der Nähe der momentan gehaltenen Schreib-Startphase längs der Richtung eines Vorschubs oder einer Verzögerung in Zeitfolgen.

5. Verfahren einer Rahmenausrichter-Steuerung nach Anspruch 1, **dadurch gekennzeichnet, dass**, wenn entschieden ist, dass ein Schlupf aufgetreten ist aufgrund der Schreibphase, die versucht, die Lesephase zu überholen, oder der Lesephase, die versucht, die Schreibphase zu überholen, eine Auswahlregel einer neuen Schreib-Startphase geschaltet wird.

6. Verfahren einer Rahmenausrichter-Steuerung nach Anspruch 5, **dadurch gekennzeichnet, dass** der Gegenstand einer Auswahl unter der Auswahlregel der Schreib-Startphase eine Schreib-Startphase ist in der Nähe der momentan gehaltenen Schreib-Startphase längs der Richtung eines Vorschubs oder einer Verzögerung in Zeitfolgen.

7. Verfahren einer Rahmenausrichter-Steuerung nach Anspruch 1, **dadurch gekennzeichnet, dass** die Rahmenausrichtung durch einen Zeitmultiplex-Prozess bewirkt wird.

8. Verfahren einer Rahmenausrichter-Steuerung nach Anspruch 1, **dadurch gekennzeichnet, dass** Bedingungen für eine Schlüpfentscheidung zum Zeitpunkt einer Initialisierung verschieden sind von Bedingungen für eine Schlüpfentscheidung bei einem normalen Anlass.

9. Verfahren einer Rahmenausrichter-Steuerung nach Anspruch 1, **dadurch gekennzeichnet, dass** Bedingungen für eine Entscheidung des Auftretens eines Schlupfes in dem Rahmenausrichter-Speicher vorgesehen sind, eine für jeden unterschiedlichen Typ eines Signals niedriger Geschwindigkeit, in dem Fall, wenn dort eine Mehrzahl von Typen eines Signals niedriger Geschwindigkeit vorhanden ist.

10. Verfahren einer Rahmenausrichter-Steuerung nach Anspruch 1, **dadurch gekennzeichnet, dass** in dem Fall, in dem der Rahmenausrichter eine redundante Konfiguration aufweist, derart dass, ein aktives System (55) und zumindest ein überzähliges System (56) parallel zueinander betrieben werden, der Inhalt des gemeinsamen Phasenspeichers des aktiven Systems zu dem gemeinsamen Phasenspeicher des überzähligen Systems transferiert wird vor einem Schalten von dem aktiven System zu dem überzähligen System.

11. Verfahren einer Rahmenausrichter-Steuerung nach Anspruch 1, **dadurch gekennzeichnet, dass** in dem Fall, in dem der Rahmenausrichter eine redundante Konfiguration aufweist, derart, dass ein aktives System (55) und zumindest ein überzähliges System (56) parallel zueinander betrieben werden, der Inhalt des gemeinsamen Phasenspeichers des aktiven Systems immer zur Übereinstimmung mit dem Inhalt des gemeinsamen Phasenspeichers des überzähligen Systems gebracht wird.

12. Verfahren einer Rahmenausrichter-Steuerung nach Anspruch 1, **dadurch gekennzeichnet, dass** die Anzahl der Zeiten, in welchen der Schlupf nacheinander auftritt, gezählt wird und ein Alarm ausgegeben wird, wenn die Zahl von Schlüpfen, die nacheinander auftreten, einen vorbestimmten Wert überschreitet.

13. Verfahren einer Rahmenausrichter-Steuerung nach Anspruch 1, **dadurch gekennzeichnet, dass** die Zahl von Schlüpfen, die nacheinander auftreten, gezählt wird und die Schreib-Startphase für den Rahmenausrichter-Speicher festgelegt wird, wenn die Zahl von Schlüpfen, die nacheinander auftreten, einen vorbestimmten Wert überschreitet.

14. Rahmenausrichter-Steuergerät zur Verwendung in einem System zum Übertragen einer Mehrzahl von Signalen niedriger Geschwindigkeit mit einer Rahmenstruktur in einen Rahmen hoher Geschwindigkeit durch Multiplexen der Signale niedriger Geschwindigkeit, aufweisend einen Rahmenausrichter-Speicher, **dadurch gekennzeichnet, dass** eine Mehrzahl von Kandidaten von Schreib-Startphasen in den Rahmenausrichterspeicher (1) gesetzt sind, wobei der Ausdruck Schreib-Startphase einem Bezeichner für einen Speicherbereich des Rahmenausrichter-Speichers entspricht, und dass das Steuergerät individuelle Phasenspeicher (30) aufweist, einen für jedes Signal niedriger Geschwindigkeit, akkommodiert in dem Rahmen hoher Geschwindigkeit, zum Speichern einer Schreib-Startphase, die aus den Kandidaten von Schreib-Startphasen für den Rahmenausrichter-Speicher ausgewählt ist, Referenzspeicher (31), einen für jedes Signal niedriger Geschwindigkeit, zum Anzeigen eines speziellen individuellen Phasenspeichers, der zu referenzieren ist, Mittel (10) zum Setzen der Referenzspeicher in einer derartigen Weise, um die individuellen Phasenspeicher zu referenzieren von wechselweise verschiedenen zusammenpassenden der Signale niedriger Geschwindigkeit, die eine Phasenanpassung erfordern, und Mittel zum Transferieren von Werten der referenzierten individuellen Phasenspeicher von zusammenpassenden Signalen niedriger Geschwindigkeit zu den individuellen Phasenspeichern der referenzierenden Seite.

15. Rahmenausrichter-Steuergerät nach Anspruch 14, **dadurch gekennzeichnet, dass** die Rahmenausrichtung durch einen Multiplex-Prozess bewirkt wird.

16. Rahmenausrichter-Steuergerät nach Anspruch 14, **dadurch gekennzeichnet, dass** Bedingungen für eine Schlüpfentscheidung zum Zeitpunkt einer Initialisierung verschieden sind von jenen für eine Schlüpfentscheidung bei normalen Anlässen.

17. Rahmenausrichter-Steuergerät nach Anspruch 14, **dadurch gekennzeichnet, dass** in dem Fall, in dem dort eine Mehrzahl von Typen von Signalen niedriger Geschwindigkeit vorgesehen sind, eine Bedingung für eine Entscheidung für ein Auftreten eines Schlupfes in dem Rahmenausrichter-Speicher vorgesehen ist für jeden der verschiedenen Typen des Signals.

18. Rahmenausrichter-Steuergerät nach Anspruch 14, **dadurch gekennzeichnet, dass** in dem Fall, in dem der Rahmenausrichter von einer redundanten Konfiguration ist, derart, dass ein aktives System (55) und zumindest ein überzähliges System (56) parallel zueinander betrieben werden, der Inhalt der individuellen Phasenspeicher des aktiven Systems zu den individuellen Phasenspeichern des überzähligen Systems übertragen wird, bevor von dem aktiven System zu dem überzähligen System geschaltet wird.

19. Rahmenausrichter-Steuergerät nach Anspruch 14, **gekennzeichnet durch** ein Aufweisen eines Mittels, um einen Inhalt der individuellen Phasenspeicher des aktiven Systems mit dem Inhalt der individuellen Phasenspeicher des überzähligen Systems zur Übereinstimmung zu bringen in dem Fall, in dem der Rahmenausrichter von einer redundanten Konfiguration ist, derart, dass ein aktives System (55) und zumindest ein überzähliges System (56) parallel zueinander betrieben werden.

20. Rahmenausrichter-Steuergerät nach Anspruch 14, **gekennzeichnet durch** das Aufweisen eines Mittels zum Zählen der Anzahl von Schlüpfen, die nacheinander auftreten und eines Mittels zum Ausgeben eines Alarms, wenn die Anzahl von Schlüpfen, die nacheinander auftreten, einen vorbestimmten Wert überschreitet.

21. Rahmenausrichter-Steuergerät nach Anspruch 14, **gekennzeichnet durch** Aufweisen eines Mittels zum Zählen der Anzahl von Schlüpfen, die nacheinander auftreten und eines Mittels zum Festlegen der Schreib-Startphase des Rahmenausrichter-Speichers, wenn die Anzahl von Schlüpfen, die nacheinander auftreten, einen vorbestimmten Wert überschreitet.

22. Rahmenausrichter zur Verwendung in einem System zum Übertragen einer Mehrzahl von Signalen niedriger Geschwindigkeit mit einer Rahmenstruktur in einen Rahmen hoher Geschwindigkeit durch Multiplexen der Signale niedriger Geschwindigkeit, aufweisend einen Rahmenausrichter-Speicher (1) zum Speichern der Signale niedriger Geschwindigkeit, **dadurch gekennzeichnet, dass** der Rahmenausrichter des Weiteren einen Schreib-Zähler (3) aufweist zum Bestimmen einer Schreibadresse des Rahmenausrichter-Speichers für jedes Signal niedriger Geschwindigkeit, einen Lesezähler (4) zum Bestimmen einer Leseadresse des Rahmenausrichter-Speichers für jedes Signal niedriger Geschwindigkeit, einen Phasenvergleicher (5) zum Vergleichen des Wertes des Lesezählers mit dem des Schreibzählers, um damit das Auftreten eines Schlupfes zu detektieren, einen ersten Speicher (7) zum Speichern einer ausgewählten Schreib-Startphase für jedes Signal niedriger Geschwindigkeit, akkommodiert in dem Rahmen hoher Geschwindigkeit, einen zweiten Speicher (8) zum Speichern einer Schreib-Startphase entsprechend einem Bezeichner für einen Speicherbereich des Rahmenausrichter-Speichers, geteilt von einer Mehrzahl der Signale niedriger Geschwindigkeit, die eine Phasenanpassung erfordern, einen dritten Speicher (9) zum Anzeigen eines speziellen zweiten Speichers, der zu referenzieren ist, und eine Schaltung zum Auswählen einer Schreib-Startphase für den Rahmenausrichter-Speicher entsprechend dem Ergebnis eines Vergleichs zwischen dem Inhalt des ersten Speichers und des zweiten Speichers und der Information des Auftretens eines Schlupfes, detektiert durch den Phasenvergleicher.

23. Rahmenausrichter-Steuergerät nach Anspruch 14, **dadurch gekennzeichnet, dass** es einen Schreibzähler (3) aufweist zum Bestimmen einer Schreibadresse für den Rahmenausrichter-Speicher für jedes Signal niedriger Geschwindigkeit, einen Lesezähler (4) zum Bestimmen einer Leseadresse für den Rahmenausrichter-Speicher für jedes Signal niedriger Geschwindigkeit, einen Phasenvergleicher (5) zum Detektieren des Auftretens eines Schlupfes durch Vergleichen des Wertes des Lesezählers mit dem des Schreibzählers und eine Schaltung zum Auswählen einer Schreib-Startphase des Rahmenausrichter-Speichers entsprechend der Information des Auftretens eines Schlupfes, delektiert durch den Phasenvergleicher und dem Ergebnis eines Vergleichens des Inhalts eines individuellen Phasenspeichers bei einer Adresse, die einem speziellen Signal niedriger Geschwindigkeit zugeteilt ist, mit dem Inhalt des individuellen Phasenspeichers bei einer Adresse, die durch den Inhalt eines Referenzspeichers bezeichnet ist, bei einer Adresse, die dem speziellen Signal niedriger Geschwindigkeit zugeteilt ist.

## Revendications

1. Procédé de commande d'un dispositif d'alignement de blocs destiné à être utilisé dans un système pour transmettre une pluralité de signaux à vitesse faible ayant une structure de blocs à l'intérieur d'un bloc à vitesse élevée en multiplexant les signaux, **caractérisé en ce que**, dans le procédé, une pluralité de candidats pour une phase de début d'écriture sont établis dans une mémoire de dispositif d'alignement de blocs (1), dans lequel le terme phase de début d'écriture correspond à un indicateur d'une zone de mémoire de la mémoire de dispositif d'alignement de blocs, une phase de début d'écriture est sélectionnée parmi les candidats pour des phases de début d'écriture de la mémoire de dispositif d'alignement de blocs en faisant référence à une mémoire de phases commune (8) dans laquelle sont mémorisées des phases de début d'écriture partagées par une pluralité de signaux à vitesse faible nécessitant une correspondance de phase dans le bloc à vitesse élevée, et une phase de début d'écriture est sélectionnée parmi les candidats pour des phases de début d'écriture de la mémoire de dispositif d'alignement de blocs.

2. Procédé de commande d'un dispositif d'alignement de blocs selon la revendication 1, **caractérisé en ce que** la mémoire commune mémorisant des phases de début d'écriture partagées par des signaux à vitesse faible nécessitant une correspondance de phase fait l'objet d'une référence par l'intermédiaire d'une mémoire (9) indiquant une phase particulière parmi les phases de début d'écriture mémorisées dans la mémoire faisant l'objet d'une référence.

3. Procédé de commande d'un dispositif d'alignement de blocs selon la revendication 2, **caractérisé en ce que**, lorsque l'on détermine qu'un décalage est apparu suite à la tentative d'une phase d'écriture pour dépasser la phase de lecture ou à la tentative d'une phase de lecture pour dépasser la phase d'écriture, une règle de sélection d'une nouvelle phase de début d'écriture est commutée.

4. Procédé de commande d'un dispositif d'alignement de blocs selon la revendication 3, **caractérisé en ce que** l'objet de sélection soumis à la règle de sélection de la phase de début d'écriture est une phase de début d'écriture adjacente à la phase de début d'écriture actuellement conservée dans la direction d'avance ou de retard dans les séries chronologiques.

5. Procédé de commande d'un dispositif d'alignement de blocs selon la revendication 1, **caractérisé en ce que**, lorsqu'on détermine qu'un décalage est apparu suite à la tentative d'une phase d'écriture pour dépasser la phase de lecture ou à la tentative d'une phase de lecture pour dépasser la phase d'écriture, une règle de sélection d'une nouvelle phase de début d'écriture est commutée.

6. Procédé de commande d'un dispositif d'alignement de blocs selon la revendication 5, **caractérisé en ce que** l'objet de sélection soumis à la règle de sélection de la phase de début d'écriture est une phase de début d'écriture adjacente à la phase de début d'écriture actuellement conservée dans la direction d'avance ou de retard dans des séries chronologiques.

7. Procédé de commande d'un dispositif d'alignement de blocs selon la revendication 1, **caractérisé en ce que** l'alignement de blocs est effectué par un traitement de multiplexage par répartition dans le temps.

8. Procédé de commande d'un dispositif d'alignement de blocs selon la revendication 1, **caractérisé en ce que** les conditions pour une décision de décalage au moment de l'initialisation sont différentes des conditions pour une décision de décalage dans une circonstance normale.

9. Procédé de commande d'un dispositif d'alignement de blocs selon la revendication 1, **caractérisé en ce que** les conditions pour une décision d'apparition de décalage sont fournies dans la mémoire du dispositif d'alignement de blocs, une condition pour chaque type différent de signal à vitesse faible, dans le cas où il existe une pluralité de types de signal à vitesse faible.

10. Procédé de commande d'un dispositif d'alignement de blocs selon la revendication 1, **caractérisé en ce que**, dans le cas où le dispositif d'alignement de blocs a une configuration redondante de telle sorte qu'un système actif (55) et au moins un système de réserve (56) fonctionnent en parallèle l'un à l'autre, le contenu de la mémoire de phases commune du système actif est transféré vers la mémoire de phases commune du système de réserve avant de basculer du système actif vers le système de réserve.

11. Procédé de commande d'un dispositif d'alignement de blocs selon la revendication 1, **caractérisé en ce que**, dans le cas où le dispositif d'alignement de blocs a une configuration redondante de telle sorte qu'un système actif (55) et au moins un système de réserve (56) fonctionnent en parallèle l'un à l'autre, le contenu de 1a mémoire de phases commune du système actif est toujours conçu de manière à coïncider avec le contenu de la mémoire de phases commune du système de réserve.

12. Procédé de commande d'un dispositif d'alignement de blocs selon la revendication 1, **caractérisé en ce que** le nombre de fois où le décalage apparaît successivement est compté, et une alarme est émise lorsque le nombre de décalages apparaissant successivement dépasse une valeur prédéterminée.

13. Procédé de commande d'un dispositif d'alignement de blocs selon la revendication 1, **caractérisé en ce que** le nombre de décalages apparaissant successivement est compté, et la phase de début d'écriture pour la mémoire du dispositif d'alignement de blocs est fixée lorsque le nombre de décalages apparaissant successivement dépasse une valeur prédéterminée.

14. Dispositif de commande d'un dispositif d'alignement de blocs destiné à être utilisé dans un système pour transmettre une pluralité de signaux à vitesse faible ayant une structure de blocs à l'intérieur d'un bloc à vitesse élevée en multiplexant les signaux à vitesse faible, comportant une mémoire de dispositif d'alignement de blocs, **caractérisé en ce qu'**une pluralité de candidats de phases de début d'écriture sont établis dans ladite mémoire du dispositif d'alignement de blocs (1), le terme phase de début d'écriture correspondant à un indicateur d'une zone de mémoire de la mémoire du dispositif d'alignement de blocs, et **en ce que** ledit dispositif de commande comporte des mémoires de phases individuelles (30), une pour chaque signal à vitesse faible agencé dans le bloc à vitesse élevée, pour mémoriser une phase de début d'écriture sélectionnée parmi les candidats de phases de début d'écriture de la mémoire du dispositif d'alignement de blocs, des mémoires de référence (31), une pour chaque signal à vitesse faible, pour indiquer une mémoire de phases individuelle particulière qui doit faire l'objet d'une référence, des moyens (10) pour paramétrer les mémoires de référence de manière à faire référence aux mémoires de phases individuelles de signaux correspondants mutuellement différents parmi les signaux à vitesse faible nécessitant une correspondance de phase, et des moyens pour transférer des valeurs des mémoires de phases individuelles faisant l'objet d'une référence de signaux à vitesse faible correspondants vers les mémoires de phases individuelles situées du côté de référence.

15. Dispositif de commande d'un dispositif d'alignement de blocs selon la revendication 14, **caractérisé en ce que** l'alignement de blocs est effectué par un traitement de multiplexage.

16. Dispositif de commande d'un dispositif d'alignement de blocs selon la revendication 14, **caractérisé en ce que** les conditions pour une décision de décalage au moment de l'initialisation sont différentes de celles pour une décision de décalage dans des circonstances normales.

17. Dispositif de commande d'un dispositif d'alignement de blocs selon la revendication 14, **caractérisé en ce que**, dans le cas où sont fournis une pluralité de types de signal à vitesse faible, une condition pour une décision d'apparition de décalage est fournie dans la mémoire du dispositif d'alignement de blocs pour chacun des différents types du signal.

18. Dispositif de commande d'un dispositif d'alignement de blocs selon la revendication 14, **caractérisé en ce que**, dans le cas où le dispositif d'alignement de blocs a une configuration redondante de telle sorte qu'un système actif (55) et au moins un système de réserve (56) fonctionnent en parallèle l'un à l'autre, le contenu des mémoires de phases individuelles du système actif est transféré vers les mémoires de phases individuelles du système de réserve avant de basculer du système actif vers le système de réserve.

19. Dispositif de commande d'un dispositif d'alignement de blocs selon la revendication 14, **caractérisé en ce qu'**il comporte des moyens pour faire en sorte que le contenu des mémoires de phases individuelles du système actif coïncide toujours avec le contenu des mémoires de phases individuelles du système de réserve dans le cas où le dispositif d'alignement de blocs a une configuration redondante de telle sorte qu'un système actif (55) et au moins un système de réserve (56) fonctionnent en parallèle l'un à l'autre.

20. Dispositif de commande d'un dispositif d'alignement de blocs selon la revendication 14, **caractérisé en ce qu'**il comporte des moyens pour compter le nombre de décalages apparaissant successivement et des moyens pour envoyer une alarme lorsque le nombre de décalages apparaissant successivement dépasse une valeur prédéterminée.

21. Dispositif de commande d'un dispositif d'alignement de blocs selon la revendication 14, **caractérisé en ce qu'**il comporte des moyens pour compter le nombre de décalages apparaissant successivement et des moyens pour fixer la phase de début d'écriture de la mémoire du dispositif d'alignement de blocs lorsque le nombre de décalages apparaissant successivement dépasse une valeur prédéterminée.

22. Dispositif d'alignement de blocs destiné à être utilisé dans un système pour transmettre une pluralité de signaux à vitesse faible ayant une structure à l'intérieur d'un bloc à vitesse élevée en multiplexant les signaux à vitesse faible, comportant une mémoire de dispositif d'alignement de blocs (1) pour mémoriser les signaux à vitesse faible, **caractérisé en ce que** le dispositif d'alignement de blocs comporte en outre un compteur d'écriture (3) pour désigner une adresse d'écriture de la mémoire du dispositif d'alignement de blocs pour chaque signal à vitesse faible, un compteur de lecture (4) pour désigner une adresse de lecture de la mémoire du dispositif d'alignement de blocs pour chaque signal à vitesse faible, un comparateur de phase (5) pour comparer la valeur du compteur de lecture à celle du compteur d'écriture de manière à détecter l'apparition d'un décalage, une première mémoire (7) pour mémoriser une phase de début d'écriture sélectionnée pour chaque signal à vitesse faible dans le bloc à vitesse élevée, une deuxième mémoire (8) pour mémoriser une phase de début d'écriture correspondant à un indicateur d'une zone de mémoire de la mémoire du dispositif d'alignement de blocs, partagée par une pluralité des signaux à vitesse faible nécessitant une correspondance de phase, une troisième mémoire (9) pour indiquer une deuxième mémoire particulière qui doit faire l'objet d'une référence, et un circuit pour sélectionner une phase de début d'écriture de la mémoire du dispositif d'alignement de blocs en fonction du résultat de comparaison entre le contenu de la première mémoire et de la deuxième mémoire et des informations d'apparition de décalage détectée par le comparateur de phase.

23. Dispositif de commande d'un dispositif d'alignement de blocs selon la revendication 14, **caractérisé en ce qu'**il comporte un compteur d'écriture (3) pour désigner une adresse d'écriture de la mémoire du dispositif d'alignement de blocs pour chaque signal à vitesse faible, un compteur de lecture (4) pour désigner une adresse de lecture de la mémoire du dispositif d'alignement de blocs pour chaque signal à vitesse faible, un comparateur de phase (5) pour détecter l'apparition d'un décalage en comparant la valeur du compteur de lecture à celle du compteur d'écriture, et un circuit pour sélectionner une phase de début d'écriture de la mémoire du dispositif d'alignement de blocs en fonction des informations d'apparition de décalage détectée par le comparateur de phase et du résultat de comparaison entre le contenu d'une mémoire de phases individuelle située à une adresse allouée à un signal à vitesse faible particulier et le contenu de la mémoire de phases individuelle située à une adresse désignée par le contenu d'une mémoire de référence située à une adresse allouée au signal à vitesse faible particulier.
